# FASCICULE DE BREVET EUROPEEN

(11) **EP 3 301 500 B1**
(45) Date de publication et mention de la délivrance du brevet: **06.09.2023**
(21) Numéro de dépôt: 17193481.3
(22) Date de dépôt: 27.09.2017
(51) Int. Cl.: F21S 41/147, F21S 41/24, F21S 41/26, F21S 41/32, F21S 41/675, G02B 26/08, G02B 26/10

(54) **SYSTÈME D'ÉCLAIRAGE DE VÉHICULE AUTOMOBILE ET VÉHICULE AUTOMOBILE**
BELEUCHTUNGSSYSTEM EINES KRAFTFAHRZEUGS, UND KRAFTFAHRZEUG
LIGHTING SYSTEM OF A MOTOR VEHICLE AND MOTOR VEHICLE

(30) Priorité: 29.09.2016 FR 1659299; 29.09.2016 FR 1659306
(43) Date de publication de la demande: 04.04.2018
(73) Titulaire: Valeo Vision, 93012 Bobigny Cedex (FR)
(72) Inventeur: LUO, Weicheng, 93012 BOBIGNY Cedex (FR)
(74) Mandataire: Valeo Visibility

(56) Documents cités:
- EP-A2- 1 433 654
- US-A1- 2007 147 055
- US-A1- 2009 046 474
- US-A1- 2011 292 669
- US-A1- 2016 195 232

## Description

La présente invention se situe dans le domaine des systèmes d'éclairage véhicule automobile.

En particulier, la présente invention est relative à un système d'éclairage capable de réaliser simultanément la fonction d'éclairage de la chaussée et la fonction de projection d'une image sur la chaussée.

Le document EP 1 433 654 décrit un appareil d'affichage digital propre à être utilisé dans un système d'éclairage de véhicule automobile pour assurer ces deux fonctions. Cet appareil est basé sur une technologie utilisant une matrice de micro-miroirs. Cette technologie présente une bonne définition mais une puissance d'éclairage faible.

En effet, selon cette technologie, chaque micro-miroir est propre à basculer autour d'un axe de pivotement entre trois positions à angle fixé. Dans une première position angulaire, le faisceau lumineux est réfléchi vers un dispositif de projection. Dans une deuxième position angulaire, le faisceau lumineux est réfléchi vers un dispositif d'absorption de lumière. La troisième position angulaire est intermédiaire entre la première position angulaire et la deuxième position angulaire. Cette position angulaire intermédiaire est instable. Elle n'est donc pas utilisée. L'angle de pivotement maximal 2α existant entre la première position angulaire et la deuxième position angulaire est généralement égal à 12° ou à 20°.

Le faisceau lumineux réfléchi par la matrice de micro-miroirs forme un cône de lumière ayant un angle au sommet égal à l'angle de pivotement maximal 2α des micro-miroirs. Le dispositif de projection doit être disposé dans le cône de lumière formé par le faisceau lumineux en sortie de la matrice de micro-miroirs. Comme l'angle au sommet est relativement faible, la puissance d'éclairage du système d'éclairage est elle aussi relativement faible, lorsque l'on souhaite maintenir un contraste élevé.

La présente invention a pour but de proposer un système d'éclairage pour véhicule automobile ayant une bonne définition, un niveau de contraste élevé et une forte puissance d'éclairage.

A cet effet, l'invention a pour objet un système d'éclairage de véhicule automobile comprenant :
- un dispositif d'éclairage apte à émettre un faisceau lumineux,
- un dispositif de projection comportant au moins une lentille de projection,
- une matrice de micro-miroirs comportant des micro-miroirs montés pivotant autour d'un axe de pivotement, lesdits micro-miroirs étant propres à recevoir au moins une partie du faisceau lumineux émis par le dispositif d'éclairage et à réfléchir au moins une partie du faisceau lumineux le long d'un axe de projection autour d'un axe de projection en direction du dispositif de projection, chaque micro-miroir étant apte à pivoter au maximal d'un angle, dit angle de pivotement maximal,
caractérisé en ce que le faisceau lumineux émis par le dispositif d'éclairage présente un angle au sommet, mesuré au point de convergence, qui est supérieur à l'angle de pivotement maximal et dans lequel la au moins une lentille de projection présente en coupe frontale, c'est-à-dire dans un plan perpendiculaire à l'axe de projection, la forme d'un rectangle ayant un côté longitudinal s'étendant selon une direction sensiblement parallèle à l'axe de pivotement des micro-miroirs.

Selon des modes de réalisation particuliers, le système d'éclairage selon l'invention comporte l'une ou plusieurs des caractéristiques suivantes :
- l'angle au sommet du faisceau lumineux émis par le dispositif d'éclairage est égal à au moins 1.3 fois l'angle de pivotement maximal des micro-miroirs, la au moins une lentille de projection présentant en coupe frontale un côté latéral, la dimension du côté longitudinal en coupe frontale de la lentille étant supérieure ou égale à 1,3 fois la dimension du côté latéral en coupe frontale de la au moins une lentille de projection ;
- l'angle au sommet du faisceau lumineux émis par le dispositif d'éclairage est au moins égal à deux fois l'angle de pivotement maximal des micro-miroirs, la au moins une lentille de projection présentant en coupe frontale un côté latéral, et dans lequel la dimension du côté longitudinal en coupe frontale de la au moins lentille de projection est environ égale à deux fois la dimension du côté latéral en coupe frontale de la au moins lentille de projection ;
- le faisceau lumineux réfléchis par les micro-miroirs présente un premier angle d'ouverture selon une direction principale et un second angle d'ouverture différent du premier angle d'ouverture dans une direction secondaire, le second angle d'ouverture étant différent du premier angle d'ouverture et dans lequel ladite direction secondaire est perpendiculaire aux axes de pivotement des micro-miroirs et perpendiculaire à l'axe de projection, ladite principale étant parallèle aux axes de pivotement ;
- le premier angle d'ouverture est au moins égal à 1.3 fois le second angle d'ouverture ;
- ledit premier angle d'ouverture est égal à deux fois le second angle d'ouverture ;
- le dispositif d'éclairage comporte une première source de lumière apte à émettre des rayons lumineux s'étendant autour d'un premier axe d'illumination dirigé en direction de la matrice de micro-miroirs et une seconde source de lumière apte à émettre des rayons lumineux s'étendant autour d'un second axe d'illumination dirigé en direction de la matrice de micro-miroirs, le premier axe d'illumination et le second axe d'illumination étant disposé dans un même plan d'illumination, un angle égal à l'angle de pivotement maximal des micro-miroirs étant défini entre le plan d'illumination et l'axe de projection.
- le premier axe d'illumination présente un angle d'illumination avec ledit second axe d'illumination, ledit angle d'illumination étant inférieur ou égal à deux fois ledit angle de pivotement maximal ;
- le dispositif d'éclairage comporte une source de lumière propre à émettre un faisceau lumineux ,un réflecteur de forme ellipsoïdique propre à réfléchir le faisceau lumineux pour former un faisceau lumineux ayant un angle d'ouverture égal à deux fois l'angle de pivotement maximal, une plieuse propre à replier le faisceau réfléchi par le réflecteur afin de générer un faisceau ayant un angle d'ouverture égal à deux fois l'angle de pivotement maximal selon une première direction et un angle d'ouverture égal à l'angle de pivotement maximal selon une seconde direction perpendiculaire à la première direction, et une lentille convergente propre à recevoir le faisceau lumineux réfléchi par le réflecteur et la plieuse ;
- ladite lentille convergente est agencée à au moins une distance prédéfinie du foyer de l'ellipse formé par le réflecteur et de la matrice de micro-miroirs, la distance prédéfinie étant égale à deux fois la distance focale de la lentille convergente.

La présente invention concerne également un véhicule automobile comportant un système d'éclairage défini par les caractéristiques mentionnées ci-dessus.

L'invention sera mieux comprise à la lecture de la description qui va suivre, donnée uniquement à titre d'exemple et faite en se référant aux figures sur lesquelles :
- la figure 1 est une vue en perspective du système d'éclairage selon la présente invention, ce système d'éclairage comporte un dispositif d'éclairage selon un premier mode de réalisation ;
- la figure 2 est une vue schématique explicitant le fonctionnement d'une matrice de micro-miroirs ;
- la figure 3 est une vue schématique de face du système d'éclairage illustré sur la figure 1 ;
- la figure 4 est une vue schématique en coupe d'une partie système d'éclairage illustré sur la figure 1, ladite coupe étant réalisée dans le plan d'illumination PI ;
- la figure 5 est une vue schématique en coupe d'une source de lumière du dispositif d'éclairage illustré sur la figure 1 ;
- la figure 6 est une vue schématique de dessus du système d'éclairage illustré sur la figure 1 ;
- la figure 7 est une vue schématique de côté d'un dispositif d'éclairage selon un second mode de réalisation de l'invention ; et
- la figure 8 est une vue schématique de dessus du dispositif d'éclairage selon le second mode de réalisation de l'invention.

Dans la présente description, le terme « vertical » est défini comme étant une direction parallèle à la direction de la pesanteur. Le terme « horizontal » est défini comme étant une direction perpendiculaire à la direction de la pesanteur.

La présente invention est décrite sur les figures et dans la description, par rapport à un repère direct (X,Y,Z) tel que défini usuellement dans l'industrie automobile. Dans ce repère (X,Y,Z), le véhicule se déplace dans le sens négatif de l'axe X, l'axe Y correspond à l'axe longitudinal du véhicule, et l'axe Z s'étend de bas en haut du véhicule.

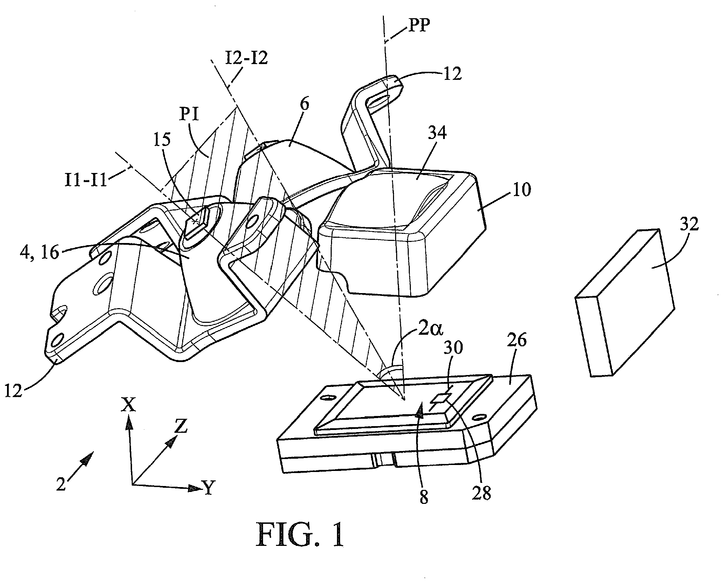

En référence à la figure 1, le système d'éclairage 2 de véhicule automobile comprend un dispositif d'éclairage 3 apte à émettre un faisceau lumineux, une matrice 8 de micro-miroirs propre à réceptionner au moins une partie du faisceau lumineux émis par le dispositif d'éclairage 3, et à en réfléchir au moins une partie, et un dispositif de projection 10 propre à recevoir au moins une partie du faisceau lumineux réfléchi par la matrice et à le projeter sur la chaussée.

La matrice 8 de micro-miroirs est propre à réceptionner au moins une partie du faisceau lumineux émis par le dispositif d'éclairage, et à en réfléchir au moins une partie vers le dispositif de projection 10.

La matrice 8 de micro-miroirs est généralement désignée par l'acronyme DMD (de l'anglais « Digital Micro-mirror Device »). En référence à la figure 1, la matrice 8 présente généralement la forme d'un rectangle ou d'un carré. Elle comprend un support 26 et un grand nombre de micro-miroirs 28 fixés sur le support. Dans la matrice 8, les micro-miroirs 28 sont répartis selon des lignes et des colonnes. Le nombre de micro-miroirs 28 est, par exemple, égal à 720 x 480= 345 600, 800 x 600 = 480 000, 1024 x 768 = 786 432, 1280 x 1024 = 1 310 720 ou un nombre différent. Un seul micro-miroir a été représenté schématiquement sur la figure 1.

Chaque micro-miroir 28 comprend un substrat semi-conducteur fixé sur le support 26, un bras de pivotement porté par le substrat semi-conducteur et un élément micro-miroir porté par le bras de pivotement et adapté pour pivoter autour d'un axe de pivotement 30. En particulier, chaque micro-miroir 28 est propre à pivoter d'un angle de pivotement maximal 2α. L'angle de pivotement maximal 2α est caractéristique de la matrice de micro-miroirs. Il est défini dans les spécifications de la matrice. Il est généralement égal à 12° ou 20°. L'ensemble des axes de pivotement 30 de la matrice sont montés parallèles entre eux et parallèles à un côté du rectangle formé par la matrice. Dans l'exemple de réalisation de la présente invention illustré sur les figures, les axes de pivotement 30 sont parallèles au petit côté de la matrice. Dans le référentiel adopté, dans le sens normal de montage du système d'éclairage selon l'invention dans un véhicule, les axes de pivotement 30 sont orientés sensiblement verticalement (verticale, plus ou moins 10 degrés).

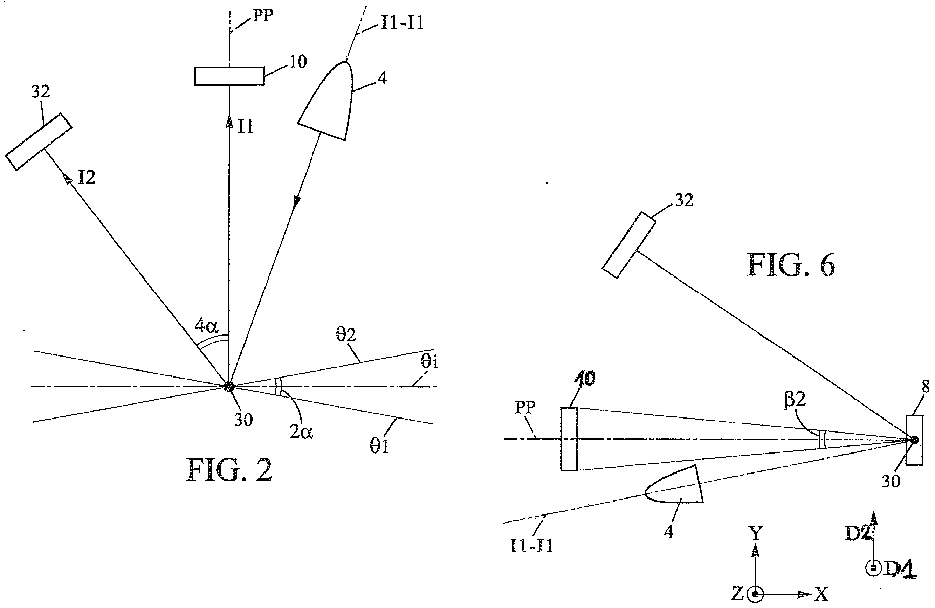

En référence à la figure 2, chaque micro-miroir 28 est basculé individuellement autour de l'axe de pivotement 30 sur réception d'une commande électrique transmise par une unité de commande non représentée. Chaque micro-miroir 28 peut ainsi pivoter entre une première position angulaire θ1 dans laquelle le micro-miroir 28 réfléchi le faisceau lumineux l1 vers le dispositif de projection 10 et une seconde position angulaire θ2 dans laquelle le micro-miroir 28 réfléchi le faisceau lumineux l2 vers un élément d'absorption de la lumière 32, tel que par exemple une paroi en tôle. L'angle défini entre la première position angulaire θ1 et la seconde position angulaire θ2 est l'angle de pivotement maximal des micro-miroirs 2α.

Lorsque l'ensemble des micro-miroirs 28 de la matrice 8 sont dans la première position angulaire θ1, le faisceau lumineux réfléchi l1 par la matrice s'étendent dans une direction privilégiée dirigée sensiblement vers le centre dispositif de projection 10. Cette direction privilégiée est appelée, dans la présente demande de brevet, axe de projection P-P. Cet axe est sensiblement parallèle à l'axe X.

En basculant certains micro-miroirs dans la première position angulaire θ1 et d'autres micro-miroirs dans la seconde position angulaire θ2, un motif est projeté sur la route.

Chaque micro-miroir 28 peut également être pivoté dans une position angulaire intermédiaire θi dans laquelle le micro-miroir est parallèle au plan moyen du support 26. La position angulaire intermédiaire θi n'est pas choisie par l'unité de commande car elle est instable.

Le dispositif de projection 10 comporte une lentille de projection 34. réalisée en matière plastique et/ou en verre.

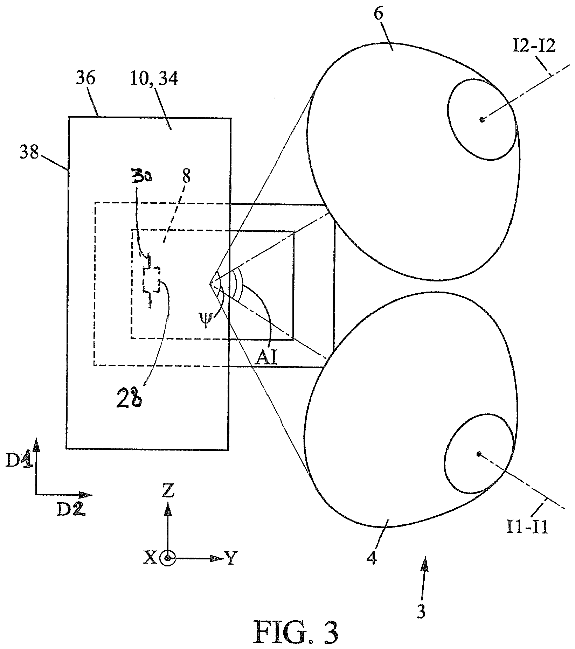

En référence à la figure 3, la lentille de projection 34 comporte un axe optique qui est parallèle à l'axe X ou l'axe de projection P-P, préférentiellement confondu avec ce dernier. La lentille de projection 34 s'étend dans un plan sécant de l'axe optique, de préférence perpendiculairement. Elle présente en coupe frontale, c'est-à-dire dans un plan perpendiculaire à l'axe optique, la forme d'un rectangle ayant un côté longitudinal s'étendant selon une direction sensiblement parallèle, préférentiellement parallèle, à l'axe de pivotement 30 des micro-miroirs 28. Par sensiblement, parallèle, on entend parallèle plus ou moins 10 degrés. Dans le sens normal de montage du dispositif de projection dans le système d'éclairage selon l'invention une fois monté sur un véhicule, cette direction est sensiblement confondue avec la verticale, c'est-à-dire qu'elle est verticale à plus ou moins 10 degrés.

Avantageusement, dans le mode de réalisation représenté, la dimension du côté longitudinal 38 de la section frontale de la lentille de projection est égale à 2 fois la dimension du côté latéral 36 de la section frontale de la lentille de projection.

En variante, la dimension du côté longitudinal 38 de la section frontale de la lentille de projection est supérieure ou égale à 1,3 fois la dimension du côté latéral 36 de la section frontale de la lentille de projection.

En variante, le dispositif de projection comporte deux lentilles de projection associées en doublet présentant toutes les deux une section frontale en forme d'un rectangle ayant un côté longitudinal s'étendant selon une direction sensiblement parallèle à l'axe de pivotement 30 des micro-miroirs 28.. Ces lentilles de projection sont généralement appelées lentille d'entrée et lentille de sortie. La lentille d'entrée est généralement une lentille convergente. Elle est propre à recevoir le faisceau lumineux issu de la matrice de micro-miroirs. Cette variante est particulièrement avantageuse lorsque la source de lumière est monochromatique par exemple une source de lumière de type LED rouge, verte, etc.. Le doublet de lentilles sert à compenser les aberrations chromatiques en lumière blanche.

Selon la présente invention, un éclairage important des parties latérale peut-être obtenu même avec une lentille de projection allongée parallèlement à l'axe de pivotement des micro-miroirs, lorsque la puissance d'éclairage est suffisante. La puissance d'éclairage est augmenté dans la présente invention par l'association d'une lentille de projection allongée parallèlement à l'axe de pivotement des micro-miroirs et d'un dispositif d'éclairage propre à éclairer la matrice de micro-miroirs avec un cône de lumière ayant un angle au sommet Ψ plus large. Selon la présente invention, cet angle au sommet Ψ est mesuré au point de convergence.

En particulier, le faisceau lumineux émis par le dispositif d'éclairage 3 présente un angle au sommet Ψ supérieur à l'angle de pivotement maximal 2α.

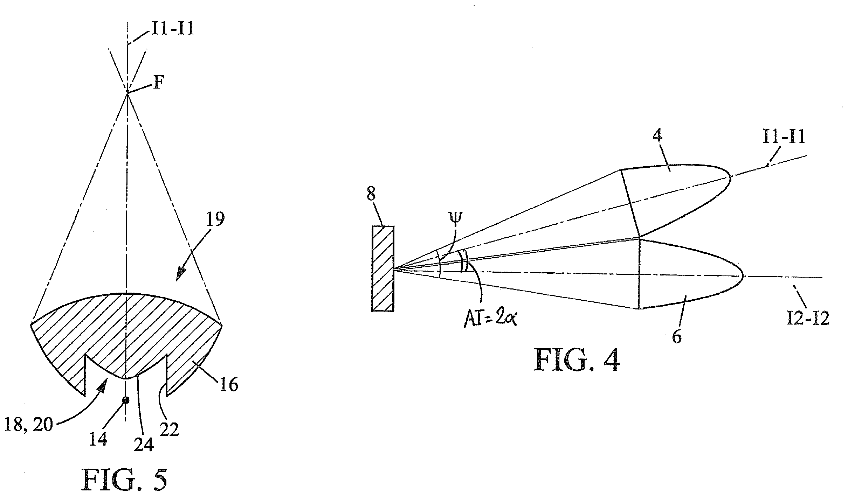

Dans le mode de réalisation représenté sur les figures 3 et 4, l'angle au sommet Ψ du faisceau lumineux émis par le dispositif d'éclairage 3 est égal à deux fois l'angle de pivotement maximal 2α des micro-miroirs.

En variante, l'angle au sommet Ψ du faisceau lumineux émis par le dispositif d'éclairage 3 est égale à au moins 1.3 fois l'angle de pivotement maximal 2α des micro-miroirs.

Pour réaliser ce cône de lumière incident ayant un angle au sommet Ψ plus large, le dispositif d'éclairage 3 du système d'éclairage selon le premier mode de réalisation de l'invention comporte une première source de lumière 4 propre à émettre un faisceau lumineux qui s'étend selon une direction privilégiée appelée premier axe d'illumination I1-I1, et une seconde source de lumière 6 propre à émettre un faisceau lumineux qui s'étend selon une autre direction privilégiée appelée second axe d'illumination I2-I2.

Les rayons lumineux issus de la première source de lumière 4 forment un faisceau lumineux symétrique par rapport au premier axe d'illumination 11-11. Les rayons lumineux issus de la seconde source de lumière 6 forment un faisceau lumineux symétrique par rapport au second axe d'illumination I2-I2.

Avantageusement, les premier I1-I1 et second I2-I2 axes d'illumination sont sécants sensiblement dans le plan formé par la matrice de micro-miroirs de sorte que l'éclairement de la matrice de micro miroirs présente deux maxima locaux distincts.

Selon un second aspect du mode de réalisation de l'invention illustré sur les figures 1 à 6, le premier axe d'illumination 11-11 et le second axe d'illumination I2-I2 sont disposés dans un même plan d'illumination PI. Ce plan d'illumination PI est illustré sur la figure 1 par des hachures. Un angle sensiblement égal à l'angle de pivotement maximal 2α des micro-miroirs est défini entre le plan d'illumination PI et l'axe de projection P-P.

Le positionnement particulier de la première source de lumière 4 et de la seconde source de lumière 6 dans un même plan d'illumination PI permet avantageusement d'augmenter la puissance d'éclairage tout en maintenant un angle environ égal à deux fois l'angle de pivotement maximal 2α entre le dispositif de projection 10 et l'élément d'absorption de la lumière 32, comme cela est intrinsèquement requis par le principe de fonctionnement des matrices de micro-miroirs.

Le premier axe d'illumination I1-I1 présente un angle d'illumination Al avec le second axe d'illumination I2-I2.

Cet angle d'illumination AI supérieur à deux fois l'angle de pivotement maximal 2α.

De préférence, cet angle d'illumination Al est égal à deux fois l'angle de pivotement maximal 2α.

La première source de lumière 4 comprend une diode électroluminescente 14 et un collimateur 16. En référence à la figure 5, le collimateur 16 est propre à focaliser les rayons lumineux émis par la diode électroluminescente 14 vers un foyer F. La matrice de micro-miroirs 8 est disposée à quelques centimètres en amont ou en aval du foyer F. La figure 2 représente schématiquement un mode de réalisation possible du collimateur 16. Selon ce mode de réalisation, le collimateur 16 est une pièce de révolution ayant une face d'entrée 18 des rayons lumineux et une face de sortie 19 des rayons lumineux. La face d'entrée 18 comprend un creux 20 délimité par deux parois latérales 22 et une paroi de fond convexe 24 dirigée en direction de la diode électroluminescente 14. Sur cette figure, la diode électroluminescente 14 a été représentée schématiquement par un point. La surface émissive de la diode électroluminescente 14 est agencée en regard ou à l'intérieur du creux 20. La face de sortie 19 du collimateur est convexe dirigée dans une direction opposée à la diode électroluminescente 14.

La seconde source de lumière 6 est similaire à la première source de lumière 4 et ne sera pas décrite en détail.

En référence à la figure 6, le faisceau lumineux réfléchi par les micro-miroirs 28 présente un premier angle d'ouverture β1 dans une direction dite direction principale D1, et un second angle d'ouverture β2 différent du premier angle d'ouverture β1 dans une direction perpendiculaire à la direction principale, dite direction secondaire D2. Le second angle d'ouverture β2 ainsi que les directions principale D1 et secondaire D2 ont été représentés sur la figure 6. Le premier angle d'ouverture β1 n'a pas été représenté.

La direction secondaire D2 est perpendiculaire aux axes de pivotement 30 des micro-miroirs et perpendiculaire à l'axe de projection P-P. La direction principale D1 est parallèle aux axes de pivotement 30.

Dans le mode de réalisation illustré sur les figures, la direction principale D1 s'étend selon l'axe Z du repère (X,Y,Z) et la direction secondaire D2 s'étend selon l'axe Y du repère (X,Y,Z). Dans le sens normal de montage de l'exemple de réalisation retenu, la direction D1 est sensiblement verticale.

Un dispositif d'éclairage 39 selon un second mode de réalisation peut également être utilisé dans le système d'éclairage 2 selon la présente invention.

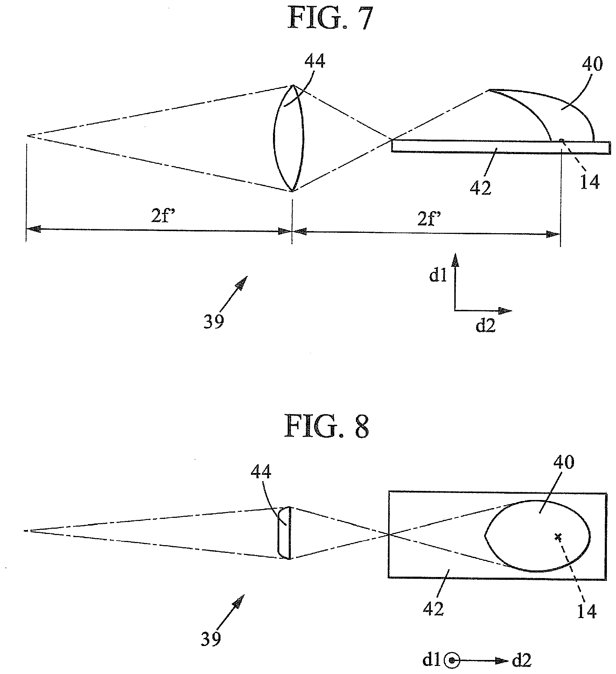

En référence aux figures 7 et 8, le dispositif d'éclairage 39 comporte :
- une diode électroluminescente 14 propre à émettre un faisceau lumineux semi-lambertien,
- un réflecteur 40 ayant une forme ellipsoidique propre à réfléchir le faisceau lumineux pour former un faisceau lumineux ayant un angle d'ouverture égal à l'angle de pivotement maximal 2α des micro-miroirs dans toutes les directions,
- une plieuse 42 propre à replier le faisceau réfléchi par le réflecteur 40 afin de générer un faisceau lumineux ayant un angle d'ouverture égal à deux fois angle de pivotement maximal 2α des micro-miroirs selon une première direction d1, et un angle d'ouverture égal à l'angle de pivotement maximal 2α des micro-miroirs selon une seconde direction d2 perpendiculaire à la première direction d1, et
- une lentille convergente 44 propre à recevoir le faisceau lumineux réfléchi par le réflecteur 40 et la plieuse 42 et à générer un faisceau lumineux convergent. La lentille convergente possède une distance focale f'.

La diode électroluminescente 14 et le réflecteur 40 sont portés par la plieuse 42.

La plieuse 42 est un miroir de repliement d'image généralement appelé « folding mirror » en anglais. La plieuse s'étend jusqu'au deuxième foyer de l'ellipsoïde formée par le réflecteur 40.

La lentille convergente est agencée selon un montage 2F-2F c'est-à-dire que la lentille convergente est disposée à une distance égale à deux fois sa distance focale f' du foyer de l'ellipsoïde formé par le réflecteur 40. La matrice de micro-miroirs 8 est disposée au-delà d'une distance égale à deux fois la distance focale f' de la lentille convergente 44.

Le dispositif d'éclairage 39 selon le second mode de réalisation de l'invention présente avantageusement une seule source de lumière et une seule unité de commande de cette source de lumière. Ce dispositif d'éclairage est plus robuste car il comprend une unique connexion électrique.

En variante, la face de sortie du collimateur 16 est plane.

En variante, la diode électroluminescente 14 est remplacée par plusieurs diodes électroluminescentes alignées les unes par rapport aux autres.

En variante, la diode électroluminescente 14 est remplacée par une source laser et en particulier une diode laser.

## Revendications

1. Système d'éclairage (2) de véhicule automobile comprenant :
- un dispositif d'éclairage (3, 39) apte à émettre un faisceau lumineux,
- un dispositif de projection (10) comportant au moins une lentille de projection (34),
- une matrice (8) de micro-miroirs comportant des micro-miroirs (28) montés pivotant autour d'un axe de pivotement (30), lesdits micro-miroirs (28) étant propres à recevoir au moins une partie du faisceau lumineux émis par le dispositif d'éclairage (3, 39) et à réfléchir au moins une partie du faisceau lumineux le long d'un axe de projection (P-P) autour d'un axe de projection (P-P) en direction du dispositif de projection (10), chaque micro-miroir (28) étant apte à pivoter au maximal d'un angle, dit angle de pivotement maximal (2α),
**caractérisé en ce que** le faisceau lumineux émis par le dispositif d'éclairage (3, 39) présente un angle au sommet (Ψ), mesuré au point de convergence, qui est supérieur à l'angle de pivotement maximal (2α) et dans lequel la au moins une lentille de projection (34) présente en coupe frontale, c'est-à-dire dans un plan perpendiculaire à l'axe de projection (P-P), la forme d'un rectangle ayant un côté longitudinal (38) s'étendant selon une direction sensiblement parallèle à l'axe de pivotement (30) des micro-miroirs (28).

2. Système d'éclairage (2) selon la revendication 1, dans lequel l'angle au sommet (Ψ) du faisceau lumineux émis par le dispositif d'éclairage (3, 39) est égal à au moins 1.3 fois l'angle de pivotement maximal (2α) des micro-miroirs, la au moins une lentille de projection (34) présentant en coupe frontale un côté latéral (36), la dimension du côté longitudinal (38) en coupe frontale de la au moins une lentille de projection étant supérieure ou égale à 1,3 fois la dimension du côté latéral (36) en coupe frontale de la au moins une lentille de projection.

3. Système d'éclairage (2) selon la revendication 1, dans lequel l'angle au sommet (Ψ) du faisceau lumineux émis par le dispositif d'éclairage (3, 39) est au moins égal à deux fois l'angle de pivotement maximal (2α) des micro-miroirs, la au moins une lentille de projection (34) présentant en coupe frontale un côté latéral (36), et dans lequel la dimension du côté longitudinal (38) en coupe frontale de la au moins une lentille de projection est environ égale à deux fois la dimension du côté latéral (36) en coupe frontale de la au moins une lentille de projection.

4. Système d'éclairage (2) selon l'une quelconque des revendications 1 à 3, dans lequel le faisceau lumineux réfléchis par les micro-miroirs (28) présente un premier angle d'ouverture (β1) selon une direction principale (D1) et un second angle d'ouverture (β2) différent du premier angle d'ouverture dans une direction secondaire (D2), le second angle d'ouverture (β2) étant différent du premier angle d'ouverture (β1) et dans lequel ladite direction secondaire (D2) est perpendiculaire aux axes de pivotement (30) des micro-miroirs et perpendiculaire à l'axe de projection (P-P), ladite direction principale (D1) étant parallèle aux axes de pivotement (30).

5. Système d'éclairage (2) selon la revendication 4, dans lequel le premier angle d'ouverture (β1) est au moins égal à 1.3 fois le second angle d'ouverture (β2).

6. Système d'éclairage (2) selon la revendication 4, dans lequel ledit premier angle d'ouverture (β1) est égal à deux fois le second angle d'ouverture (β2).

7. Système d'éclairage (2) selon l'une quelconque des revendications 1 à 6, dans lequel le dispositif d'éclairage (3) comporte une première source de lumière (4) apte à émettre des rayons lumineux s'étendant autour d'un premier axe d'illumination (11-11) dirigé en direction de la matrice de micro-miroirs (8) et une seconde source de lumière (6) apte à émettre des rayons lumineux s'étendant autour d'un second axe d'illumination (I2-I2) dirigé en direction de la matrice de micro-miroirs (8), le premier axe d'illumination (11-11) et le second axe d'illumination (I2-I2) étant disposé dans un même plan d'illumination (PI), un angle égal à l'angle de pivotement maximal (2α) des micro-miroirs étant défini entre le plan d'illumination (PI) et l'axe de projection (P-P).

8. Système d'éclairage (2) selon la revendication 7, dans lequel le premier axe d'illumination (11-11) présente un angle d'illumination (AI) avec ledit second axe d'illumination (I2-I2), ledit angle d'illumination (AI) étant inférieur ou égal à deux fois ledit angle de pivotement maximal (2α).

9. Système d'éclairage (2) selon l'une quelconque des revendications 1 à 6, dans lequel le dispositif d'éclairage (39) comporte :
- une source de lumière (14) propre à émettre un faisceau lumineux,
- un réflecteur (40) de forme ellipsoïdique propre à réfléchir le faisceau lumineux pour former un faisceau lumineux ayant un angle d'ouverture égal à deux fois l'angle de pivotement maximal (2α) ,
- une plieuse (42) propre à replier le faisceau réfléchi par le réflecteur (40) afin de générer un faisceau ayant un angle d'ouverture égal à deux fois l'angle de pivotement maximal (2α) selon une première direction (d1) et un angle d'ouverture égal à l'angle de pivotement maximal (2α) selon une seconde direction (d2) perpendiculaire à la première direction (d1), et
- une lentille convergente (44) propre à recevoir le faisceau lumineux réfléchi par le réflecteur (40) et la plieuse (42).

10. Système d'éclairage (2) selon la revendication 9, dans laquelle ladite lentille convergente (44) est agencée à au moins une distance prédéfinie du foyer de l'ellipse formé par le réflecteur (40) et de la matrice de micro-miroirs (8), la distance prédéfinie étant égale à deux fois la distance focale (f') de la lentille convergente.

11. Véhicule automobile comportant un système d'éclairage (2) selon l'une quelconque des revendications 1 à 10.

## Patentansprüche

1. Beleuchtungssystem (2) eines Kraftfahrzeugs, das enthält:
- eine Beleuchtungsvorrichtung (3, 39), die geeignet ist, einen Lichtstrahl zu emittieren,
- eine Projektionsvorrichtung (10), die mindestens eine Projektionslinse (34) aufweist,
- eine Matrix (8) von Mikrospiegeln, die um eine Schwenkachse (30) schwenkbar montierte Mikrospiegel (28) aufweist, wobei die Mikrospiegel (28) geeignet sind, mindestens einen Teil des von der Beleuchtungsvorrichtung (3, 39) emittierten Lichtstrahls zu empfangen und mindestens einen Teil des Lichtstrahls entlang einer Projektionsachse (P-P) um eine Projektionsachse (P-P) herum in Richtung der Projektionsvorrichtung (10) zu reflektieren, wobei jeder Mikrospiegel (28) fähig ist, maximal um einen Winkel zu schwenken, maximaler Schwenkwinkel (2α) genannt,
**dadurch gekennzeichnet, dass** der von der Beleuchtungsvorrichtung (3, 39) emittierte Lichtstrahl einen Scheitelwinkel (Ψ), gemessen am Konvergenzpunkt, aufweist, der größer ist als der maximale Schwenkwinkel (2α), und wobei die mindestens eine Projektionslinse (34) im Frontalschnitt, d.h. in einer Ebene lotrecht zur Projektionsachse (P-P), die Form eines Rechtecks mit einer Längsseite (38) aufweist, die sich gemäß einer Richtung im Wesentlichen parallel zur Schwenkachse (30) der Mikrospiegel (28) erstreckt.

2. Beleuchtungssystem (2) nach Anspruch 1, wobei der Scheitelwinkel (Ψ) des von der Beleuchtungsvorrichtung (3, 39) emittierten Lichtstrahls mindestens gleich dem 1,3-Fachen des maximalen Schwenkwinkels (2α) der Mikrospiegel ist, wobei die mindestens eine Projektionslinse (34) im Frontalschnitt eine laterale Seite (36) aufweist, wobei die Abmessung der Längsseite (38) im Frontalschnitt der mindestens einen Projektionslinse größer als das oder gleich dem 1,3-Fachen der Abmessung der lateralen Seite (36) im Frontalschnitt der mindestens einen Projektionslinse ist.

3. Beleuchtungssystem (2) nach Anspruch 1, wobei der Scheitelwinkel (Ψ) des von der Beleuchtungsvorrichtung (3, 39) emittierten Lichtstrahls mindestens gleich dem Doppelten des maximalen Schwenkwinkels (2α) der Mikrospiegel ist, wobei die mindestens eine Projektionslinse (34) im Frontalschnitt eine laterale Seite (36) aufweist, und wobei die Abmessung der Längsseite (38) im Frontalschnitt der mindestens einen Projektionslinse etwa gleich dem Doppelten der Abmessung der lateralen Seite (36) im Frontalschnitt der mindestens einen Projektionslinse ist.

4. Beleuchtungssystem (2) nach einem der Ansprüche 1 bis 3, wobei der von den Mikrospiegeln (28) reflektierte Lichtstrahl einen ersten Öffnungswinkel (β1) gemäß einer Hauptrichtung (D1) und einen zweiten Öffnungswinkel (β2) anders als der erste Öffnungswinkel in einer Sekundärrichtung (D2) aufweist, wobei der zweite Öffnungswinkel (β2) sich vom ersten Öffnungswinkel (β1) unterscheidet, und wobei die Sekundärrichtung (D2) lotrecht zu den Schwenkachsen (30) der Mikrospiegel und lotrecht zur Projektionsachse (P-P) ist, wobei die Hauptrichtung (D1) zu den Schwenkachsen (30) parallel ist.

5. Beleuchtungssystem (2) nach Anspruch 4, wobei der erste Öffnungswinkel (β1) mindestens gleich dem 1,3-Fachen des zweiten Öffnungswinkels (β2) ist.

6. Beleuchtungssystem (2) nach Anspruch 4, wobei der erste Öffnungswinkel (β1) gleich dem Doppelten des zweiten Öffnungswinkels (β2) ist.

7. Beleuchtungssystem (2) nach einem der Ansprüche 1 bi 6, wobei die Beleuchtungsvorrichtung (3) eine erste Lichtquelle (4), die fähig ist, sich um eine in Richtung der Matrix von Mikrospiegeln (8) gerichtete erste Beleuchtungsachse (I1-I1) herum erstreckende Lichtstrahlen zu emittieren, und eine zweite Lichtquelle (6) aufweist, die fähig ist, sich um eine in Richtung der Matrix von Mikrospiegeln (8) gerichtete zweite Beleuchtungsachse (I2-I2) herum erstreckende Lichtstrahlen zu emittieren, wobei die erste Beleuchtungsachse (I1-I1) und die zweite Beleuchtungsachse (I2-I2) in einer gleichen Beleuchtungsebene (PI) angeordnet sind, wobei ein Winkel gleich dem maximalen Schwenkwinkel (2α) der Mikrospiegel zwischen der Beleuchtungsebene (PI) und der Projektionsachse (P-P) definiert ist.

8. Beleuchtungssystem (2) nach Anspruch 7, wobei die erste Beleuchtungsachse (I1-I1) einen Beleuchtungswinkel (AI) mit der zweiten Beleuchtungsachse (I2-I2) aufweist, wobei der Beleuchtungswinkel (AI) kleiner als das oder gleich dem Doppelten des maximalen Schwenkwinkels (2α) ist.

9. Beleuchtungssystem (2) nach einem der Ansprüche 1 bis 6, wobei die Beleuchtungsvorrichtung (39) aufweist:
- eine Lichtquelle (14), die geeignet ist, einen Lichtstrahl zu emittieren,
- einen Reflektor (40) elliptischer Form, der geeignet ist, den Lichtstrahl zu reflektieren, um einen Lichtstrahl zu bilden, der einen Öffnungswinkel gleich dem Doppelten des maximalen Schwenkwinkels (2α) hat,
- eine Biegefläche (42), die geeignet ist, den vom Reflektor (40) reflektierten Strahl zu biegen, um einen Strahl zu erzeugen, der einen Öffnungswinkel gleich dem Doppelten des maximalen Schwenkwinkels (2α) gemäß einer ersten Richtung (d1) und einen Öffnungswinkel gleich dem maximalen Schwenkwinkel (2α) gemäß einer zweiten Richtung (d2) lotrecht zur ersten Richtung (d1) hat, und
- eine konvergierende Linse (44), die geeignet ist, den vom Reflektor (40) und der Biegefläche (42) reflektierten Lichtstrahl zu empfangen.

10. Beleuchtungssystem (2) nach Anspruch 9, wobei die konvergierende Linse (44) in mindestens einem vordefinierten Abstand vom Brennpunkt der vom Reflektor (40) gebildeten Ellipse und von der Matrix von Mikrospiegeln (8) angeordnet ist, wobei der vordefinierte Abstand gleich dem Doppelten der Brennweite (f') der konvergierenden Linse ist.

11. Kraftfahrzeug, das ein Beleuchtungssystem (2) nach einem der Ansprüche 1 bis 10 aufweist.

## Claims

1. Motor vehicle lighting system (2) comprising:
- a lighting device (3, 39) capable of emitting a light beam,
- a projection device (10) comprising at least one projection lens (34),
- an array (8) of micro-mirrors comprising micro-mirrors (28) mounted in a pivoting manner about a pivot axis (30), said micro-mirrors (28) being capable of receiving at least part of the light beam emitted by the lighting device (3, 39) and of reflecting at least part of the light beam along a projection axis (P-P) about a projection axis (P-P) in the direction of the projection device (10), each micro-mirror (28) being capable of pivoting to the maximum by an angle, this being referred to as the maximum pivoting angle (2α),
**characterized in that** the light beam emitted by the lighting device (3, 39) exhibits an angle at the upper vertex (Ψ), measured at the point of convergence, which is greater than the maximum pivoting angle (2α) and wherein the at least one projection lens (34) viewed in a frontal section, that is in a plane perpendicular to the projection axis (P-P), has the form of a rectangle having a longitudinal side (38) extending in a direction that is substantially parallel to the pivot axis (30) of the micro-mirrors (28).

2. Lighting system (2) according to Claim 1, wherein the angle at the vertex (Ψ) of the light beam emitted by the lighting device (3, 39) is equal to at least 1.3 times the maximum pivoting angle (2α) of the micro-mirrors, the at least one projection lens (34) exhibiting in frontal section a lateral side (36), the size of the longitudinal side (38) of the frontal section of the at least one projection lens being greater than or equal to 1.3 times the size of the lateral side (36) of the frontal section of the at least one projection lens.

3. Lighting system (2) according to Claim 1, wherein the angle at the vertex (Ψ) of the light beams emitted by the lighting device (3, 39) is at least equal to twice the maximum pivoting angle (2α) of the micro-mirrors, the at least one projection lens (34) exhibiting in frontal section a lateral side (36), and wherein the size of the longitudinal side (38) of the frontal section of the at least one projection lens is roughly equal to twice the size of the lateral side (36) of the frontal section of the at least one projection lens.

4. Lighting system (2) according to any one of Claims 1 to 3, wherein the light beam reflected by the micro-mirrors (28) exhibits a first aperture angle (β1) according to a main direction (D1) and a second aperture angle (β2) different from the first aperture angle in a secondary direction (D2), the second aperture angle (β2) being different from the first aperture angle (β1) and wherein said secondary direction (D2) is perpendicular to the pivot axes (30) of the micro-mirrors and perpendicular to the projection axis (P-P), said main direction (D1) being parallel to the pivot axes (30).

5. Lighting system (2) according to Claim 4, wherein the first aperture angle (β1) is at least equal to 1.3 times the second aperture angle (β2).

6. Lighting system (2) according to Claim 4, wherein said first aperture angle (β1) is equal to twice the second aperture angle (β2).

7. Lighting system (2) according to any one of Claims 1 to 6, wherein the lighting device (3) comprises a first light source (4) capable of emitting light beams extending about a first lighting axis (11-11) aimed in the direction of the array of micro-mirrors (8) and a second light source (6) capable of emitting light beams extending about a second lighting axis (I2-I2) aimed in the direction of the array of micro-mirrors (8), the first lighting axis (11-11) and the second lighting axis (I2-I2) being disposed in a same lighting plane (PI), an angle equal to the maximum pivoting angle (2α) of the micro-mirrors being defined between the lighting plane (PI) and the projection axis (P-P).

8. Lighting system (2) according to Claim 7, wherein the first lighting axis (I1-I1) exhibits a lighting angle (Al) with said second lighting axis (I2-I2), said lighting angle (Al) being lower than or equal to twice said maximum pivoting angle (2α).

9. Lighting system (2) according to any one of Claims 1 to 6, wherein the lighting device (39) comprises:
- a light source (14) capable of emitting a light beam,
- an ellipsoidal reflector (40) capable of reflecting the light beam to create a light beam with an aperture angle equal to twice the maximum pivoting angle (2α) ,
- a folding unit (42) capable of folding the light beam reflected by the reflector (40), in order to generate a beam having an aperture angle equal to twice the maximum pivoting angle (2α) in a first direction (d1) and an aperture angle equal to the maximum pivoting angle (2α) in a second direction (d2) perpendicular to the first direction (d1), and
- a converging lens (44) capable of receiving the light beam reflected by the reflector (40) and the folding unit (42).

10. Lighting system (2) according to Claim 9, wherein said converging lens (44) is located at least at a predefined distance from the focal point of the ellipsis formed by the reflector (40) and from the array of micro-mirrors (8), the predefined distance being equal to twice the focal distance (f') of the converging lens.

11. Motor vehicle comprising a lighting system (2) according to any one of Claims 1 to 10.
